**Europäisches Patentamt**

**European Patent Office**

**Office européen des brevets**

(19)

(11) Veröffentlichungsnummer : **0 235 576**
**B1**

(12)                          EUROPÄISCHE PATENTSCHRIFT

(45) Veröffentlichungstag der Patentschrift :
13.12.89

(51) Int. Cl.⁴ : **F 16 L   9/19**

(21) Anmeldenummer : 87101249.8

(22) Anmeldetag : 29.01.87

(54) Flexibler geschlossener Rohrverbund.

(30) Priorität : 01.03.86 DE 3606767

(43) Veröffentlichungstag der Anmeldung :
09.09.87 Patentblatt 87/37

(45) Bekanntmachung des Hinweises auf die Patenterteilung : 13.12.89 Patentblatt 89/50

(84) Benannte Vertragsstaaten :
AT BE CH ES FR GB GR IT LI LU NL SE

(56) Entgegenhaltungen :
DE--A-- 2 642 552
DE--U-- 1 861 324
DE--U-- 1 863 425
DE--U-- 8 532 447
FR--A-- 2 225 680
US--A-- 3 822 903

(73) Patentinhaber : REHAU AG + Co
Rheniumhaus
D-8673 Rehau (DE)

(72) Erfinder : Der Erfinder hat auf seine Nennung verzichtet

## Beschreibung

Die Erfindung betrifft einen flexiblen, geschlossenen Rohrverbund aus einer Anzahl parallel zueinander verlaufender, gebündelter Kunststoff-Rohre, wobei die einzelnen Rohre des Rohrbündels durch Verbindungsmittel zusammengefaßt sind.

Aus der DE-C-33 08 482 ist ein flexibler Rohrverbund aus einzelnen Kunststoff-Rohren bekannt, wobei die Einzelrohre nach ihrer Herstellung derart zusammengefaßt sind, daß die untereinander benachbarten Rohre längsverlaufend linienförmig aneinander liegen und als Rohrbündel von einer Deckschicht umgeben sind, wobei die Deckschicht mit dem zugeordneten Wandbereich der Einzelrohre durchgehend längsverlaufend fest verbunden ist. Mit dieser Methode wird ein relativ steifer, jedoch wickelbarer Rohrverbund erzielt, der aufgrund seiner Flexibilität auch in bereits verlegte Rohrsysteme eingezogen werden kann.

Aus dem DE-U-82 13 407 ist ein weiterer Rohrverbund bekannt geworden, welcher zur Einführung in einen Kabelkanal dient. Dieser Rohrverbund ist aus mehreren Einzelrohren aufgebaut, die untereinander durch einstückig mit den Rohren hergestellte Abstandsstege zu einer Matte vereinigt sind. Diese Abstandsstege sind flexibel und gestatten es, die Einzelrohre derart aneinander anzulegen, daß die benachbarten Rohre längsverlaufend linienförmig aneinander liegen. Die untereinander mittels der Abstandsstege verbundenen Rohre sollen in zusammengeschwenktem Zustand in einen Kabelkanal eingezogen werden. Hier treten jedoch Schwierigkeiten auf, da das Zusammenschwenken der Rohre direkt beim Einzug in den Kabelkanal erfolgen muß und demzufolge entsprechende Vorrichtungen benötigt werden. Außerdem steht zu befürchten, daß das lose anliegende Außenrohr nach der Verschwenkung zu einer solchen Flexibilität des Rohrbündels führt, das insbesondere auf längeren Einzugsstrecken das Einziehen des Rohrbündels in einen Kabelkanal erschwert, wenn nicht gar unmöglich macht. Dem gegenüber ist es Aufgabe der Erfindung, einen Rohrverbund so zu gestalten, daß die Einzelrohre des Verbundes fest miteinander verhaftet sind, und daß mit der Verbindung der Einzelrohre eine erhöhte Flexibilität des Rohrbündels erzielt wird, so daß ein Aufwickeln des Rohrbündels mit kleinem Wickelradius genauso möglich ist wie das ungehinderte Einziehen des geschlossenen Rohrverbundes in Schutzrohre, z. B. in Kabelkanäle. Erfindungsgemäß wird dazu vorgeschlagen, daß die Verbindungsmittel längsverlaufende, flexible Bänder sind, welche annähernd tangential an außenliegenden Umfangsbereichen benachbarter Rohre derart angelenkt sind, daß die Einzelrohre in gestrecktem Zustand der Bänder innerhalb des Rohrbündels in definiertem Abstand zueinander stehen.

Das geschlossene Rohrbündel kann kontinuierlich in unbegrenzter Länge hergestellt werden, wobei zunächst die Einzelrohre des Rohrbündels erzeugt und unmittelbar danach die als Bänder dienenden Verbindungsmittel zwischen benachbarten Rohren an die Einzelrohre angespritzt werden. Diese Herstellungsweise kann beispielsweise im Koextrusionsverfahren erfolgen.

Beim erfindungsgemäßen Aufbau des Rohrbündels behalten die Einzelrohre ihre ursprüngliche Flexibilität und aufgrund der zwischen den Einzelrohren befindlichen, bandförmigen Verbindungsmittel kann das Rohrbündel mit minimalem Wickelradius beispielsweise auf eine Trommel aufgespult werden.

Wenn während oder nach der Verlegung die Einzelrohre des Rohrbündels vereinzelt werden müssen, kann das als Verbindungsmittel angespritzte Band leicht von den benachbarten Rohren gelöst werden, indem die Anschweißstelle einfach mit einem Schneidwerkzeug bearbeitet und somit das flexible Band von der Oberfläche des Einzelrohres getrennt wird.

Als Verbindungsmittel kann ferner eine Umhüllung des Rohrbündels dienen, welche mit außenliegenden Umfangsbereichen der im Rohrbündel zusammengefaßten Einzelrohre fest verbunden ist. Der Abstand der Einzelrohre voneinander in einem derart hergestellten Rohrbündel entspricht dem Abstand der Einzelrohre, welche mit den flexiblen Bändern gemäß Hauptanspruch aneinander angelenkt sind. Hierbei werden also keine Einzelbänder zwischen die benachbarten Einzelrohre gespritzt, sondern das Band wird als Umhüllung um außenliegende Teile des Rohrumfangs geführt und mit diesen fest verbunden. Im übertragenen Sinne nimmt hier also ein breites Band die Einzelrohre des geschlossenen Rohrbündels auf, wobei diese Einzelrohre mit dem entsprechenden Abstand voneinander im Rohrbündel festgelegt sind. Der Abstand wird durch die Breite der Bandbereiche zwischen zwei benachbarten Einzelrohren bestimmt und auf diese Weise wird die gleiche Flexibilität des geschlossenen Rohrbündels erzielt.

Weiter kann es vorteilhaft sein, als Verbindungsmittel flexible Bandabschnitte zu wählen, welche abschnittsweise im Längsverlauf benachbarter Einzelrohre an deren außenliegenden Umfangsbereichen fest angeordnet sind. Durch diese Maßnahme wird eine Flexibilität des Rohrbündels in allen Richtungen erzielt. Diese Bandabschnitte werden in bestimmten Abständen auf außenliegenden Umfangsbereichen jeweils benachbarter Einzelrohre des Rohrbündels angelenkt. Die Abstände werden dabei vorteilhaft so gewählt, daß das Rohrbündel die notwendige Festigkeit aufweist und trotzdem eine optimale Flexibilität zu erzielen ist. Die nötige Festigkeit kann beispielsweise dadurch erreicht werden, daß gereckte Bänder verwendet werden. Die Bandabschnitte aus diesen Bändern werden automatisch während der gleichzeitigen Herstellung der Einzelrohre an geeigneter Stelle der Produktionslinie eingebracht.

Das Rohrbündel kann eine verschiedene Anzahl von Rohren unterschiedlicher Durchmesser aufweisen, wobei nach Belieben eine gerade oder ungerade Anzahl von Einzelrohren zusammengefaßt werden kann.

Das Aufbringen der als Verbindungsmittel wirkenden längsverlaufenden, flexiblen Bänder auf den äußeren Umfang der Einzelrohre kann im Koextrusionsverfahren erfolgen, wobei die Verschweißung der Bänder mit der Rohroberfläche im thermoplastischen Zustand erfolgt. Es liegt aber auch im Rahmen der Erfindung, die Einzelrohre zunächst herzustellen und dann mit den Bändern längsverlaufend zu verbinden. In diesem Fall können die Bänder an die Oberfläche der Einzelrohre angespritzt werden, wobei die Wärme der aufgespritzten Schmelze die Rohroberfläche in dem definierten Bereich anschmilzt und auf diese Weise die Verbindung erfolgt. Bei der Verklebung der Bänder mit den Rohroberflächen wird ein entsprechender Klebstoff bzw. Haftvermittler an den Klebestellen verwendet, wobei die Bänder kraftschlüssig auf die zugeordneten Rohroberflächen aufgebracht werden müssen.

In der Zeichnung sind Ausführungsbeispiele des Rohrbündels schematisch dargestellt. Es zeigt :

Fig. 1 das Rohrbündel mit annähernd tangential angelenkten Verbindungsmitteln.

Fig. 2 das Rohrbündel mit teilweiser Umhüllung mit dem Verbindungsmittel.

Fig. 3 das Rohrbündel mit flexiblen Bandabschnitten als Verbindungsmittel.

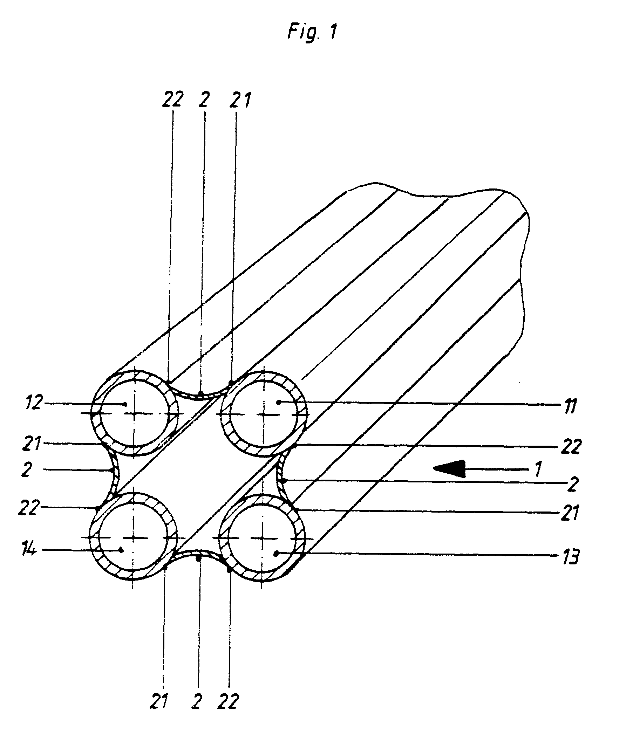

Das in Fig. 1 dargestellte Rohrbündel 1 besteht aus vier Einzelrohren 11, 12, 13, 14. Zwischen jeweils zwei Einzelrohren 11 und 12, 12 und 14, 14 und 13, 13 und 11 ist jeweils das Band 2 als Verbindungsmittel angelenkt.

Das Band 2 weist zwischen den Schweißstellen 21, 22 an den Einzelrohren 11, 12, 13, 14 eine Breite auf, die es aufgrund der Flexibilität der Bandabschnitte den Einzelrohren erlaubt, innerhalb des Rohrbündels beispielsweise beim Aufwickeln eine Stellung einzunehmen, die das Rohrbündel 1 praktisch flachlegt. Flexibilitatserhöhend kommt für das Rohrbündel 1 noch hinzu, daß die Einzelrohre 11, 12, 13, 14 in sich als Kunststoff-Rohre ebenfalls flexibel sind. Mit der speziellen Wahl der Anzahl der Einzelrohre sowie der Breite der Verbindungsmittel kann ein Rohrbündel 1 hergestellt werden, bei welchem praktisch die Einzelrohre in Reihe nebeneinander liegen, obwohl sie durch die Verbindungsmittel zu einem geschlossenen Rohrverbund zusammengefaßt sind.

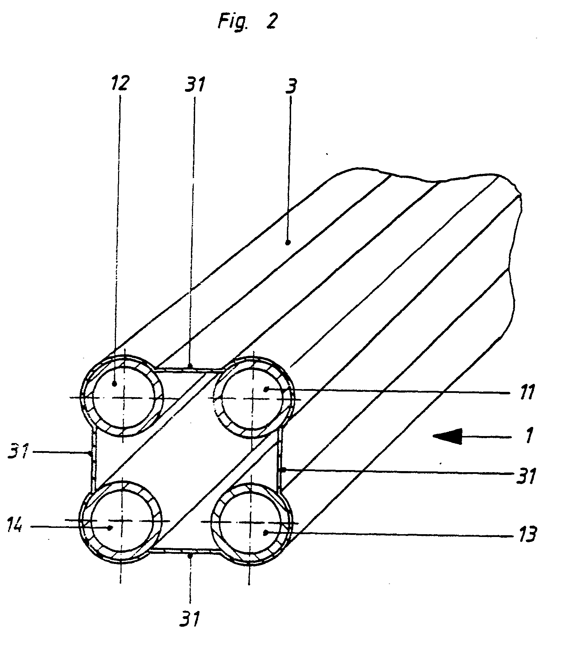

In Fig. 2 ist das Rohrbündel 1 mit teilweiser Umhüllung 3 mit dem Verbindungsmittel gezeigt. Der Mantel 3 ist fest mit dem größten Teil des äußeren Umfangs der Einzelrohre 11, 12, 13, 14 verbunden. Nur das ins Innere des Rohrbündels ragende Rohrsegment ist nicht von der Umhüllung bedeckt. Zwischen den Einzelrohren 11, 12, 13, 14 sind Stege 31 der Umhüllung 3 angeordnet, welche in ihrer Breite ge-nauso variiert werden können wie die Breite des Bandes 2 in Fig. 1. Die Stege 31 sind ebenfalls bandförmig flexibel gehalten und erlauben somit auch bei diesem Aufbau aufgrund der vermittelten erhöhten Flexibilität ein einwandfreies Aufwickeln bzw. Einziehen des Rohrbündels 1 in Schutzrohre.

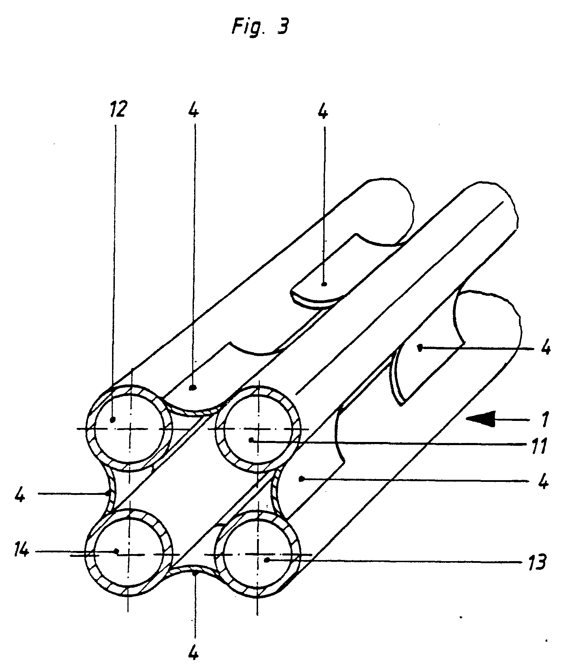

In Fig. 3 ist das Rohrbündel 1 mit flexiblen Bandausschnitten 4 als Verbindungsmittel gezeigt. Die Einzelrohre 11, 12, 13, 14 sind hier abschnittsweise über den flexiblen Bandabschnitt 4 miteinander verbunden, wobei diese Bandabschnitte 4 in beliebigem Abstand voneinander und in den die Flexibilität des Rohrbündels bestimmenden Längenverhältnissen auf den Rohrumfängen angeordnet sind.

## Patentansprüche

1. Flexibler, geschlossener Rohrverbund aus einer Anzahl parallel zueinander verlaufender, gebündelter Kunststoff-Rohre, wobei die einzelnen Rohre des Rohrbündels durch Verbindungsmittel zusammengefaßt sind, dadurch gekennzeichnet, daß die Verbindungsmittel (2, 3, 4) längsverlaufende flexible Bänder sind, welche annähernd tangential an außenliegenden Umfangsbereichen benachbarter Einzelrohre (11, 12, 13, 14) derart angelenkt sind, daß die Einzelrohre (11, 12, 13, 14) in gestrecktem Zustand der Bänder (2, 3, 4) innerhalb des Rohrbündels (1) in definiertem Abstand zueinander stehen.

2. Flexibler Rohrverbund nach Anspruch 1, dadurch gekennzeichnet, daß als Verbindungsmittel eine Umhüllung (3) des Rohrbündels (1) dient, welche mit außenliegenden Umfangsbereichen der im Rohrbündel zusammengefaßten Einzelrohre (11, 12, 13, 14) fest verbunden ist.

3. Flexibler Rohrverbund nach Anspruch 1, dadurch gekennzeichnet, daß als Verbindungsmittel flexible Bandabschnitte (4) dienen, welche abschnittsweise im Längsverlauf benachbarter Einzelrohre (11, 12, 13, 14) an deren außenliegenden Umfangsbereichen fest angeordnet sind.

4. Flexibler Rohrverbund nach Ansprüchen 1 bis 3, dadurch gekennzeichnet, daß die feste Anordnung der Verbindungsmittel (2, 3, 4) durch Verschweißen auf den Rohroberflächen erfolgt.

5. Flexibler Rohrverbund nach Ansprüchen 1 bis 3, dadurch gekennzeichnet, daß die feste Anordnung der Verbindungsmittel (2, 3, 4) durch Verkleben auf den Rohroberflächen erfolgt.

## Claims

1. A flexible, fully-enclosed multiple subducting system consisting of a number of parallel, bundled plastic subducts in which the individual subducts in the bundle are linked by connecting elements, characterized in that the connecting elements (2, 3, 4) are flexible bands running in longitudinal direction which are attached roughly tangentially to the outer circumference of the adjacent individual subducts (11, 12, 13, 14) in such a way that the individual subducts (11, 12, 13, 14) are maintained at a defined distance from one another inside the bundle (1) when the bands (2, 3, 4) are fully extended.

2. A flexible multiple subducting system according to Claim 1, characterized in that the connecting element is a sheath (3) surrounding the bundle of subducts (1) which is permanently attached to the outer circumference of the individual subducts (11, 12, 13, 14) in the bundle.

3. A flexible multiple subducting system according to Claim 1, characterized in that the connecting elements are sections of flexible band (4) which are located at intervals along the length of the adjacent individual subducts (11, 12, 13, 14) and attached to their outer circumference.

4. A flexible multiple subducting system in accordance with Claims 1 to 3, characterized in that the connecting elements (2, 3, 4) are permanently attached to the surfaces of the individual subducts by welding.

5. A flexible multiple subducting system in accordance with Claims 1 to 3, characterized in that the connecting elements (2, 3, 4) are permanently attached to the surfaces of the individual subducts by cementing.

## Revendications

1. Réunion flexible et fermée de tubes, composée d'un certain nombre de tubes en matière plastique parallèles les uns par rapport aux autres, liés en faisceau, sachant que chaque tube séparé du faisceau est raccordé aux autres par un moyen de liaison, caractérisé par le fait que les moyens de liaison (2, 3, 4) sont des bandes flexibles installées dans le sens longitudinal qui sont articulées presque de façon tangentielle sur la périphérie extérieure des tubes séparés contigus (11, 12, 13, 14) de telle sorte que quand les bandes sont tendues (tirées) (2, 3, 4) les tubes séparés (11, 12, 13, 14) soient à une distance définie les uns par rapport aux autres à l'intérieur même du faisceau de tubes (1).

2. Réunion flexible de tubes selon la revendication 1, caractérisée par le fait qu'une gaine (3) du faisceau de tubes (1) sert de moyen de liaison en étant raccordée fixement aux zones périphériques extérieures des tubes séparés (11, 12, 13, 14) réunis dans le faisceau.

3. Réunion flexible de tubes selon la revendication 1, caractérisée par le fait que des morceaux de bande (4) flexible servent de moyen de liaison et qui sont disposés de façon fixe dans le sens longitudinal et de façon discontinue sur la périphérie extérieure des tubes séparés contigus (11, 12, 13, 14).

4. Réunion flexible de tubes selon les revendications 1 à 3, caractérisée par le fait que la disposition fixe des moyens de liaison (2, 3, 4) est réalisée par soudage sur les surfaces des tubes.

5. Réunion flexible de tubes selon les revendications 1 à 3, caractérisée par le fait que la disposition fixe des moyens de liaison (2, 3, 4) est réalisée par collage sur les surfaces des tubes.

Fig. 1

Fig. 2

Fig. 3